# EUROPÄISCHE PATENTSCHRIFT

(11) **EP 1 834 837 B1**
(45) Veröffentlichungstag und Bekanntmachung des Hinweises auf die Patenterteilung: **29.04.2009**
(21) Anmeldenummer: 07004745.1
(22) Anmeldetag: 08.03.2007
(51) Int. Cl.: B60R 7/02, B60R 5/04

(54) **Staubehältnis für den Einsatz in einem Laderaum**
Storage container for use in a storage area
Récipient de retenue pour l'utilisation dans un espace de chargement

(30) Priorität: 15.03.2006 DE 102006013974
(43) Veröffentlichungstag der Anmeldung: 19.09.2007
(73) Patentinhaber: BOS GmbH & Co. KG, 73760 Ostfildern (DE)
(72) Erfinder: Bohlke, Hartmut, 42369 Wuppertal (DE); Büschgens, Olaf, 74877 Willich (DE); Göbbels, Andreas, 51515 Kürten (DE); Sitzler, Wolfgang, 42111 Wuppertal (DE); Salewski, Jürgen, 40599 Düsseldorf (DE); Schlecht, Werner P., 71665 Vaihingen (DE)
(74) Vertreter: Patentanwälte Ruff, Wilhelm, Beier, Dauster & Partner

(56) Entgegenhaltungen:
- EP-A- 1 332 919
- EP-A- 1 717 104
- DE-A1- 10 332 983
- DE-A1- 19 858 194
- DE-A1-2102005 051 73
- FR-A1- 2 743 035
- FR-A1- 2 876 641

## Beschreibung

Die Erfindung betrifft ein Staubehältnis für den Einsatz in einem Laderaum eines Kraftfahrzeugs, das auf der Unterseite einer Hutablage befestigbar und zum Beladen in mindestens eine Be- und/oder Entladeposition bewegbar ist, wobei das Staubehältnis einen Rahmen, eine Auflagefläche und mindestens eine, die Auflagefläche mit dem Rahmen verbindende, im wesentlichen unelastische Seitenwand umfasst, wobei die Seitenwand verformbar ist, so dass die Höhe des Staubehältnisses variabel ist und wobei die Auflagefläche und/oder der Rahmen im wesentlichen rechteckig und über mindestens zwei, einander gegenüberliegende Seitenwände verbunden ist.

Ein derartiges Staubehältnis ist aus der DE 10332983 A1 bekannt. Das bekannte Staubehältnis ist schubladenartig unterhalb einer Hutablage eines Kofferraums eines Kraftfahrzeugs verschiebbar angeordnet. Das Staubehältnis weist einen Rahmen auf, der klappbare Seitenwände und einen durch die Seitenwände getragenen Boden besitzt. Die Schublade ist im Bereich einer Unterseite einer Hubablage verschiebbar gelagert. Das Staubehältnis weist einen Rahmen sowie an dem Rahmen angeordnete Seitenwandungen auf, die einen Boden tragen. Die Seitenwandungen sind zweiteilig ausgeführt und um jeweils eine Achse faltbar. Dadurch kann das Staubehältnis in eine vergrößerte Position ausgeklappt oder in eine flache Position eingefaltet oder eingeklappt werden.

Aufgabe der Erfindung ist es, ein Staubehältnis der eingangs genannten Art zu schaffen, das eine verbessere Variabilität seiner Nutzgröße ermöglicht.

Diese Aufgabe wird dadurch gelöst, dass jede Seitenwand durch jeweils ein Rollo mit mindestens einer Wickelwelle und einer um die Wickelwelle auf- und abwickelbaren Rollobahn gebildet ist.

Die Höhe und damit die Größe des Staubehältnisses sind durch die verformbare Seitenwand in Abhängigkeit einer Nutzung einstellbar. Dadurch kann bei Nichtbenutzung eine minimale Höhe des Staubehältnisses realisiert werden, wobei dieses nur unwesentlich in den Laderaum des Kraftfahrzeugs hineinragt und somit die Nutzgröße des Laderaums bei Nichtbenutzung des Staubehältnisses nicht oder nur unwesentlich verringert. Die Be- und/oder Entladeposition ist vorzugsweise derart gewählt, dass die Öffnung des Staubehältnisses zumindest teilweise in eine Öffnung des Laderaums hineinragt, so dass ein einfaches Be- und/oder Entladen des Staubehältnisses möglich ist. Eine Verstauposition ist dagegen vorzugsweise derart gewählt, dass ein Zugang zu dem Laderaum durch das Staubehältnis nicht oder nur geringfügig behindert wird, beispielsweise unter der Hutablage. Der Rahmen und die Seitenwand können dabei einstückig ausgebildet sein. Dabei kann in einer Ausführungsform eine Rückstellfeder eines Wickelautomaten des Rollos als Rückstellmittel auf die Auflagefläche wirken.

Das Staubehältnis ist dabei beispielsweise ein ausziehbares Schubfach. Die Lagerung erfolgt beispielsweise über an dem Staubehältnis angeordnete Führungsschienen, welche mit komplementären, fahrzeugseitigen Längsführungen zusammenwirken. In anderen Ausführungsformen ist das Staubehältnis drehbar oder schwenkbar in dem Laderaum gelagert, beispielsweise mittels einer im Wesentlichen vertikalen Drehachse.

In einer Weiterbildung der Erfindung ist die Auflagefläche im Wesentlichen rechteckig und das Staubehältnis umfasst mindestens zwei, einander gegenüberliegende, synchronisierte Rollos. Die Synchronisation ist beispielsweise bei einer gleichsinnigen Anordnung der Rollos über einen einfachen Riementrieb möglich. Daneben ist es denkbar, die Rollos spiegelsymmetrisch, mit umgekehrtem Drehsinn anzuordnen, wobei für die Synchronisation eine entsprechende Drehrichtungsumkehr erfolgt. Die Rollobahnen der gegenüberliegenden Rollos sind in einer Ausführungsform einstückig ausgebildet, wobei auch die zwischen den Seitenwänden liegende Auflagefläche durch das Material der Rollobahnen gestaltbar ist.

In einer weiteren Ausführungsform der Erfindung sind zwei aneinander angrenzende Rollos über Kegelritzel synchronisiert. Gemäß einer Ausführungsform sind an allen vier Seiten eines Staubehältnisses mit einer rechteckigen Auflagefläche und einem rechteckigen Rahmen Rollos angeordnet, welche über Kegelritzel miteinander synchronisiert sind.

In einer weiteren Ausführungsform umfasst das Staubehältnis zwei aneinander angrenzende Rollos, deren Rollobahnen an angrenzenden Enden komplementäre Verbindungsmittel aufweisen. Durch die Verbindungsmittel sind die Ecken des durch Abwickeln der Rollobahnen vergrößerbaren Staubehältnisses verschließbar. Die Verbindungsmittel sind in einer Ausführungsform als Reißverschluss ausgebildet. Reißverschlüsse können dabei sowohl mit ineinandergreifenden Haken als auch mit entsprechenden Nuten ausgebildet sein. Die Reißverschlüsse können dabei derart gewählt sein, dass eine flüssigkeitsdichte Verbindung erzielt wird. In einer anderen Ausführungsform sind die Verbindungsmittel beispielsweise Druckknöpfe, Klettverschlüsse oder ähnliches. Durch Trennung der Verbindung sind die Rollobahnen jeweils um die zugehörige Wickelwelle zum Verkleinern des Staubehältnisses aufwickelbar.

In einer Weiterbildung der Erfindung ist die Auflagefläche zwischen einer ersten Nichtbenutzungsstellung und einer zweiten Benutzungsstellung bewegbar und die angrenzenden Rollobahnen sind durch ein feststehendes Verknüpfungsmittel bei einer Bewegung in die Benutzungsstellung miteinander verknüpfbar und bei einer Bewegung in die Nichtbenutzungsstellung voneinander lösbar. Das feststehende Verknüpfungsmittel ist bei einem Reißverschluss beispielsweise ein Reißverschlussschieber, welcher ortsfest bezüglich des Rahmens angeordnet ist. Nach der Trennung sind die Rollobahnen jeweils um zugehörige Wickelwellen aufwickelbar.

Gemäß einer Weiterbildung der Erfindung ist die Rollobahn in mindestens einer Position verriegelbar. Die Verriegelung erfolgt beispielsweise in einer Ausführungsform durch ein Verriegelungssegment an der Wickelwelle, in welches ein mit dem Rahmen verbundener Riegel eingreifen kann, so dass eine Drehung der Wickelwelle verhindert wird. Durch Lösen des Riegels ist die Wickelwelle drehbar. Sie kann sich dabei aufgrund einer Rückstellfeder in eine Richtung zum Aufwickeln der Rollobahn oder, beispielsweise aufgrund einer durch einen Nutzer und/oder einen Gegenstand aufgebrachten Kraft in eine Richtung zum Abwickeln der Rollobahn drehen. Gemäß einer Ausführungsform wirken das Verriegelungssegment und der Riegel als Ratschenantrieb zusammen. Dabei ist ein Vergrößern des Staubehältnisses aufgrund einer aufgebrachten Kraft, d.h. ein Abwickeln der Rollobahn, ohne Entriegelung möglich, ein Aufwickeln der Rollobahn, d.h. eine Verkleinerung des Staubehältnisses, ist dagegen nur durch Entriegelung möglich.

In einer weiteren Ausführungsform sind die Seitenwand und die Auflagefläche einstückig ausgeformt. Durch die einstückige Ausformung sind optisch ansprechende Lösungen ohne sichtbare Nähte und einfache Fertigungen möglich.

In einer weiteren Ausführungsform ist mindestens eine Einlegeplatte zur Verstärkung von mindestens einer Seitenwand und/oder der Auflagefläche vorgesehen. Die Seitenwand und/oder die Auflagefläche sind beispielsweise aus Stoff. Die Seitenwand ist dabei sehr flexibel und dadurch gut verformbar, beispielsweise um eine Wickelwelle rollbar oder nach dem Ziehharminka-Prinzip faltbar. Um bei einer hohen Flexibilität der Seitenwand dennoch eine hohe Festigkeit des Staubehältnisses in der Benutzungsstellung zu erhalten, sind Einlegeplatten, beispielsweise ein Einlegeboden aus Holz oder Kunststoff, zur Verstärkung des Staubehältnisses einsetzbar.

In einer Weiterbildung der Erfindung ist die Einlegeplatte faltbar. Eine Einlegeplatte für eine Seitenwand ist beispielsweise an der Auflagefläche anliegend angeordnet und durch einen Nutzer bei Bedarf entfaltbar, so dass das Staubehältnis verstärkt wird.

In einer weiteren Ausführungsform ist die Einlegeplatte schwenkbar an der Auflagefläche angeordnet. Die Einlegeplatte ist dann beispielsweise durch einen Nutzer bei Bedarf zur Verstärkung des Staubehältnisses aus einer Position parallel zur Auflagefläche in Richtung der Seitenwände verschwenkbar. In einer anderen Ausführungsform erfolgt ein Verschenken aufgrund einer Kraft, beispielsweise einer Federkraft, selbsttätig.

In einer Weiterbildung der Erfindung ist das Staubehältnis über ein Rückstellmittel, insbesondere eine Feder, belastet, welche die Auflagefläche in Richtung des Rahmens zwingt. Durch ein Eigengewicht eines Gegenstands ist das Staubehältnis entgegen einer Rückstellkraft des Rückstellmittels belastbar, so dass die Seitenfläche verformt und das Staubehältnis vergrößert wird. Ohne eingelegte Gegenstände wird die Auflagefläche dagegen aufgrund der Rückstellkraft in Richtung des Rahmens gezwungen, so dass das Staubehältnis eine minimale Größe einnimmt. Das Staubehältnis ist in seiner Be- und/oder Entladeposition vorzugsweise nach oben offen. Ein Gegenstand ist so in das Staubehältnis einlegbar. Aufgrund des Eigengewichts des Gegenstands wird das Staubehältnis vergrößert, so dass der Gegenstand nicht über die Öffnung des Laderaums hinausragt und das Staubehältnis in seine Verstauposition zurück verschiebbar ist. Reicht das Gewicht des eingelegten Gegenstands für eine Vergrößerung des Staubehältnisses nicht aus, d.h. ragt der Gegenstand noch über das Staubehältnis hinaus, so ist in einer Ausführungsform eine weitere Vergrößerung des Staubehältnisses von Hand durch einen Nutzer möglich. In einer anderen Ausführungsform wird das Staubehältnis bei einem Verschieben in eine Be- und/oder Entladeposition und/oder aufgrund einer Belastung durch eingelegte Gegenstände grundsätzlich auf seine maximale Größe vergrößert.

In einer weiteren Ausführungsform ist das Staubehältnis mindestens in der Verstauposition gegen ein Bewegen in die Be- und/oder Entladeposition verriegelbar. Der Riegelmechanismus umfasst in einer Ausgestaltung einen Hebel, welcher unter ein Teil der Karosserie und/oder in ein anderes Gegenelement für eine Verriegelung greift. Durch Verschwenken des Hebels ist die Verriegelung dabei lösbar. Ein Verschwenken des Hebels ist in einer Ausgestaltung durch ein Schloss absperrbar.

Weitere Vorteile der Erfindung ergeben sich aus der nachfolgenden Beschreibung von Ausführungsbeispielen der Erfindung, die in den Zeichnungen dargestellt sind. Für gleiche Bauteile werden dabei einheitliche Bezugszeichen verwendet.

In den Zeichnungen zeigen:
- Fig. 1: eine schematische Darstellung eines Kraftfahrzeugs mit einem erfindungsgemäßen Staubehältnis in einer Verstauposition;
- Fig. 2: eine schematische Darstellung des Kraftfahrzeugs gemäß Fig. 1 mit dem Staubehältnis in einer Be- und Entladeposition;
- Fig. 3: ein Modul für ein erfindungsgemäßes Staubehältnis;
- Fig. 4: eine Ausführungsform eines nicht zur Erfindung gehörenden Staubehältnisses mit faltbarer Seitenwand;
- Fig. 5: eine weitere Ausführungsform eines nicht zur Erfindung gehörenden Staubehältnisses mit faltbarer Seitenwand;
- Fig. 6: eine Ausführungsform eines nicht zur Erfindung gehörenden Staubehältnisses mit teleskopierbarer Seitenwand;
- Fig.7: eine Ausführungsform eines erfindungsgemäßen Staubehältnisses mit zwei gegenüberliegenden Rollos;
- Fig. 8: eine erste Variante der Ausführungsform gemäß Fig. 7;
- Fig. 9: eine zweite Variante der Ausführungsform gemäß Fig. 7;
- Fig. 10: eine Detailansicht der Ausführungsform gemäß Fig. 7;
- Fig. 11: eine Ausführungsform eines erfindungsgemäßen Staubehältnisses mit vier Rollos;
- Fig. 12: eine Detailansicht der Ausführungsform gemäß Fig. 11;
- Fig. 13: eine Draufsicht auf die Detailansicht gemäß Fig. 12;
- Fig. 14: eine schematische Darstellung einer Stoffbahn zur Verwendung für einen Ausführungsform gemäß Fig. 11.
- Fig. 15: eine schematische Seitenansicht eines Kraftfahrzeughecks mit einem Staubehältnis in der Verstauposition;
- Fig. 16: eine schematische Seitenansicht des Kraftfahrzeughecks gemäß Fig. 15, wobei das Staubehältnis sich in der Be- und/oder Entladeposition befindet;
- Fig. 17: eine perspektivische Darstellung des Kraftfahrzeughecks gemäß Fig. 16;
- Fig. 18: eine teilweise freigeschnittene, perspektivische Darstellung gemäß Fig. 17;
- Fig. 19: eine schematische Darstellung eines Verriegelmechanismus für ein Staubehältnis gemäß Fig. 15 in einer Entriegelposition und
- Fig. 20: eine schematische Darstellung des Verriegelmechanismus gemäß Fig. 20 in einer Verriegelposition.

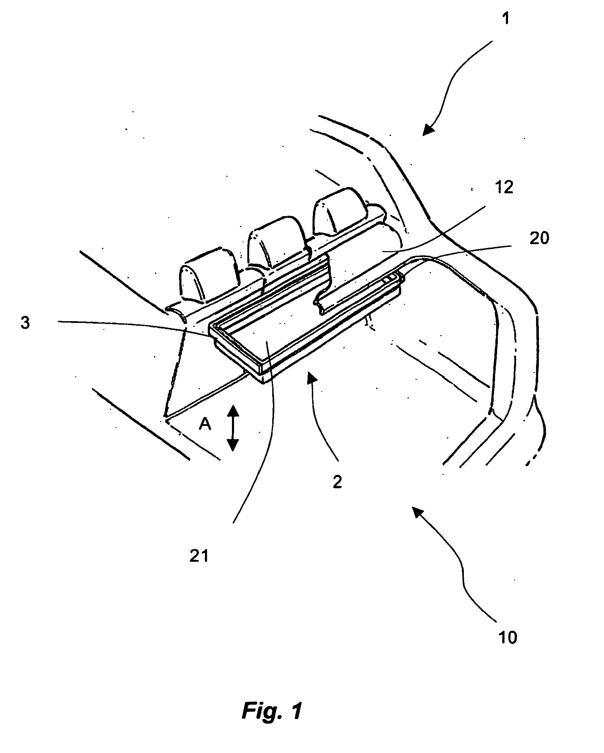

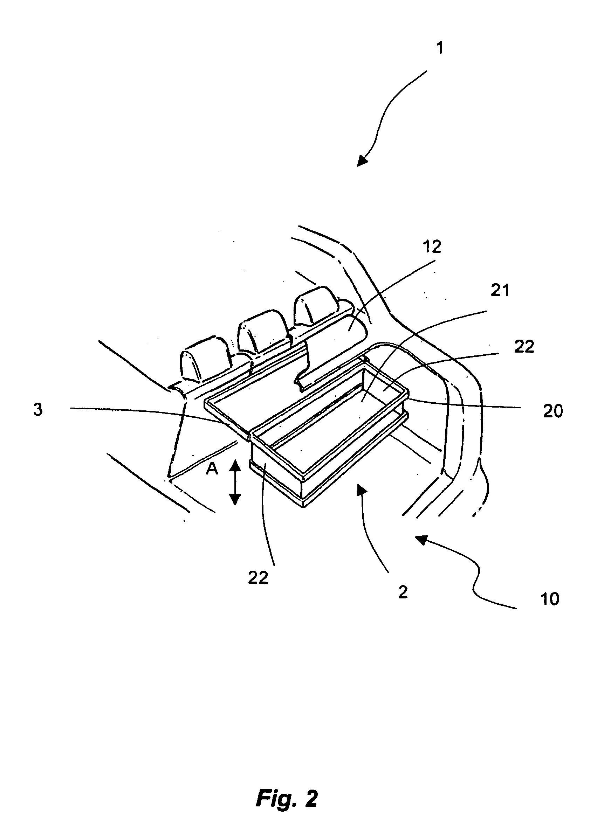

Fig. 1 und Fig. 2 zeigen schematisch ein teilweise freigeschnittenes Kraftfahrzeug 1 mit einer Ladefläche 10 und einem Staubehältnis 2, das auf der Unterseite einer Hutablage 12 befestigt ist. Das dargestellte Staubehältnis 2 ist gegenüber einem fest an dem Kraftfahrzeug 1 angeordneten Träger 3 zwischen einer in Fig. 1 dargestellten ersten Position, die im Folgenden als Verstauposition bezeichnet wird, und einer in Fig. 2 dargestellten zweiten Position zum Be- und/oder Entladen, der Be- und Entladeposition, verschiebbar ist. Das Staubehältnis 2 umfasst einen Rahmen 20 und eine Auflagefläche 21. In der dargestellten Ausführungsform ist die Auflagefläche 21 mit dem Rahmen 20 über zwei in Fig. 2 sichtbare Seitenwände 22 verbunden. Wie aus den Fig. 1 und 2 ersichtlich, ist die Höhe des Staubehältnisses variabel. Gemäß der Erfindung sind hierfür die Seitenwände 22 derart verformbar, dass die Auflagefläche entlang der durch einen Pfeil dargestellten Richtung A zwischen einer in Fig. 1 dargestellten Nichtbenutzungsstellung und einer in Fig. 2 dargestellten Benutzungsstellung bewegbar ist.

Gemäß einer Ausführungsform erfolgt eine Bewegung der Auflagefläche 21 in die in Fig. 2 dargestellte Benutzungsstellung selbsttätig bei einem Verschieben des Staubehältnisses 2 aus der in Fig. 1 dargestellten Verstauposition in die in Fig. 2 dargestellte Be- und Entladeposition. In einer weiteren Ausführungsform bleibt die Auflagefläche 21 auch bei einem Verfahren des Staubehältnisses in die in Fig. 2 dargestellte Be- und Entladeposition zunächst in der in Fig. 1 dargestellten Nichtbenutzungsstellung. Erst durch Ablage eines nicht dargestellten Gegenstandes wird in einer derartigen Ausführungsform die Auflagefläche 21 in die in Fig. 2 dargestellte Benutzungsstellung bewegt. Das durch einen Gegenstand beladene Staubehältnis behält seine in Fig. 2 dargestellte Höhe auch bei einem Rückverschieben des Staubehältnisses relativ zu dem Träger 3 in die in Fig. 1 dargestellte Verstauposition.

Das Staubehältnis 2 reicht im Wesentlichen über die gesamte Breite einer Öffnung des Laderaums 10. In anderen Ausführungsformen sind zwei Staubehältnisse nebeneinander angeordnet und/oder ein kleineres Staubehältnis vorgesehen.

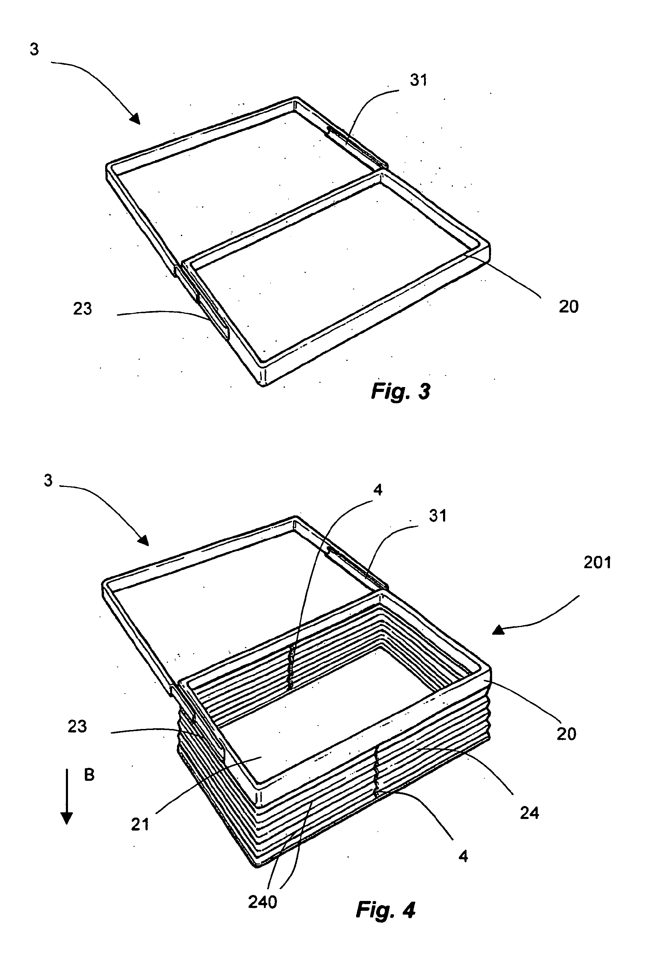

Fig. 3 zeigt schematisch ein Modul für ein Staubehältnis umfassend einen Träger 3 und einen Rahmen 20. An dem Rahmen 20 sind Führungsschienen 23 angeordnet, welche mit an dem Träger 3 angeordneten Längsführungen 31 zusammenwirken. Der Rahmen 20 ist in der dargestellten Ausführungsform mit dem Träger 3 über eine push-push Verbindung verbunden, so dass durch leichtes Andrücken des Rahmens 20 in Richtung des Trägers 3 der Rahmen 20 gegenüber dem Träger ver- und/oder entriegelt wird. Ein Ausfahren des Rahmens 20 in die Be- und Entladeposition ist beispielsweise durch eine Federkraft oder ein ähnliches Element unterstützbar. In das in Fig. 3 dargestellten Modul sind beliebige Staufächer einsetzbar. Vorzugsweise werden in das Modul erfindungsgemäße Staubehältnisse, umfassend eine oder mehrere verformbare Seitenwand/Seitenwände eingesetzt. In das dargestellte Modul sind jedoch auch andere Staubehältnisse einsetzbar. Durch das Modul ist so eine gute Anpassbarkeit an verschiedene Ausstattungsvarianten oder Fahrzeugmodelle unter Verwendung teilweise gleicher Bauteile möglich.

In anderen Ausführungsformen ist ein erfindungsgemäßes Staubehältnis über nicht gezeigte Lagereinrichtungen drehbar und/oder schwenkbar in dem Kraftfahrzeug lagerbar. Derartige Lagereinrichtungen sind vorzugsweise ebenfalls modular aufgebaut, so dass unterschiedliche Staubehältnisse an gleich aufgebauten Lagereinrichtungen einsetzbar sind.

Fig. 4 zeigt eine Ausführungsform eines nicht zur Erfindung gehörenden Staubehältnisses 201 umfassend den Rahmen 20, die Auflagefläche 21 sowie vier verformbare Seitenwände 24. Die vier Seitenwände 24 sind in der dargestellten Ausführungsform aus einer Materialbahn einstückig hergestellt. Die Seitenwände 24 sind entlang definierter Falten 240 nach dem Ziehharmonika- oder Blasebalgprinzip faltbar. In der dargestellten Ausführungsform sind zwei Seitenwände 24 durch Federn 4 verstärkt. Die Federn 4 zwingen die Auflagefläche 21 entgegen der durch den Pfeil dargestellten Richtung B in Richtung des Rahmens 20. Durch das Eigengewicht eines nicht dargestellten Gegenstands, welcher in das Staubehältnis 201 einlegbar ist, werden die Seitenwände 24 entgegen der Federkraft der Federn 4 auseinandergefaltet, so dass die Auflagefläche 21 in Richtung des Pfeils B verschoben wird und dadurch der Stauraum des Staubehältnisses 201 vergrößert wird. In einer anderen Ausführungsform ist das Staubehältnis 201 in einer gefalteten Nichtbenutzungsstellung durch ein geeignetes Element verriegelt und durch einen Nutzer bei Bedarf entriegelbar.

Das dargestellte Staubehältnis 201 ist gegenüber dem Träger 3 verschiebbar. In anderen Ausführungsformen weist das Staubehältnis eine runde Auflagefläche auf und ist drehbar um eine im Wesentlichen vertikalen Achse gelagert.

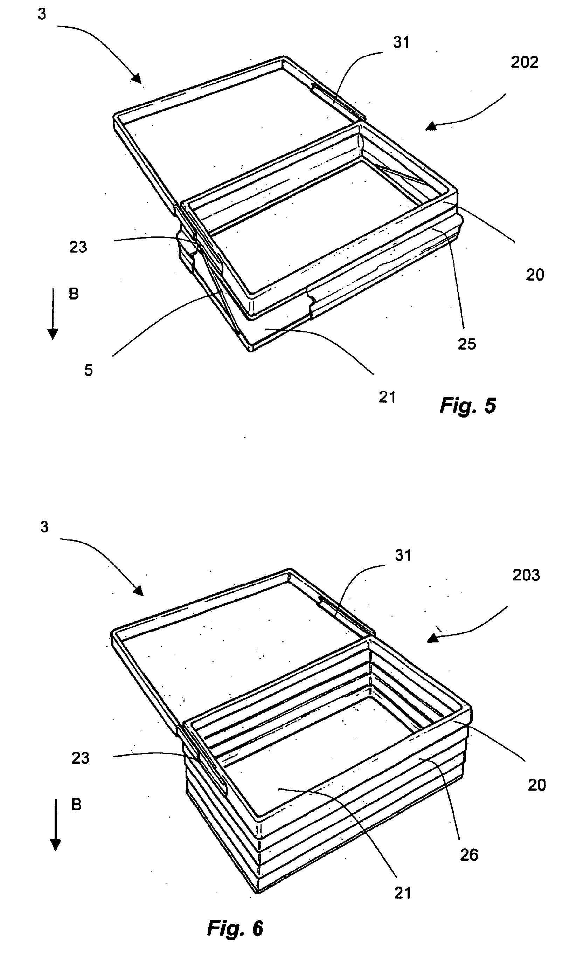

Fig. 5 zeigt eine weitere Ausführungsform eines nicht zur Erfindung gehörenden Staubehältnisses 202, welches verschiebbar an dem Träger 3 gelagert ist. Das Staubehältnis 202 umfasst den Rahmen 20 und die Auflagefläche 21. Der Rahmen 20 und die Auflagefläche 21 sind über vier verformbare Seitenwände 25 verbunden. Die vier Seitenwände 25 sind einstückig aus einer Materialbahn herstellbar. In Fig. 5 sind zwei Seitenwände 25 teilweise freigeschnitten, um ein Gestänge 5 sichtbar zu machen. Die Verbindung zwischen der Auflagefläche 21 und dem Rahmen 20 ist über das Gestänge 5 verstärkt. Die Auflagefläche 21 ist entlang der Richtung B zwischen einer Nichtbenutzugsstellung und einer Benutzungsstellung bewegbar. Durch das Gestänge 5 ist die Auflagefläche 21 vorzugsweise in einer Nichtbenutzungsstellung und einer Benutzungsstellung fixierbar. Das Gestänge 5 ist dabei unabhängig von der Wahl einer Seitenwand. So ist ein Gestänge 5 beispielsweise auch bei einer Ausführungsform mit einer nach dem Ziehharmonika-Prinzip faltbaren Seitenwand gemäß Fig. 4 denkbar.

Fig. 6 zeigt eine weitere, nicht zur Erfindung gehörende Ausführungsform eines Staubehältnisses 203, welches in der dargestellten Ausführungsform ebenfalls an dem Träger 3 verschiebbar gelagert ist. In der Ausführungsform gemäß Fig. 6 sind der Rahmen 20 und die Auflagefläche 21 über eine teleskopierbare Seitenwand 26 miteinander verbunden. Das Staubehältnis 203 mit teleskopierbarer Seitenwand 26 ist in Fig. 6 in einer Benutzugsstellung der Auflagefläche 21 gezeigt und durch Bewegung der Auflagefläche 21 entgegen der dargestellten Richtung B verkleinerbar. Die teleskopierbare Seitenwand 26 ist einstückig oder mehrstückig ausbildbar.

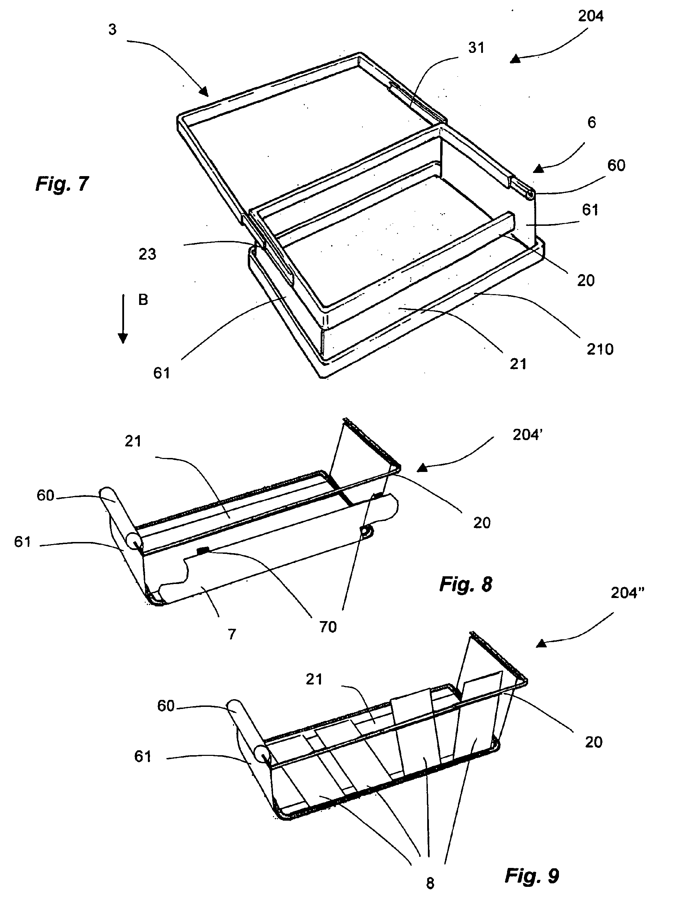

Fig. 7 zeigt eine erfindungsgemäße Ausführungsform eines an dem Träger 3 verschiebbar gelagerten Staubehältnisses 204, wobei der Rahmen 20 teilweise freigeschnitten ist. In dem Rahmen 20 sind bei dieser Ausführungsform Wickelwellen 60 von zwei gegenüberliegende Rollos 6 angeordnet. Auf den Wickelwellen 60 sind jeweils Rollobahnen 61 auf- und abwickelbar. Es ist ebenso denkbar, die Wickelwelle 60 an der Auflagefläche 21 anzuordnen. Durch die dargestellte Anordnung ist es möglich, für die beiden Rollos 6 eine gemeinsame Rollobahn 61 zu verwenden, deren Enden an den beiden Wickelwellen 60 befestigt sind. Die Auflagefläche 21 weist in dieser Ausführungsform einen Rand 210 auf, um ein Herausfallen eingelegter Gegenstände an den freien Seiten zu verhindern. Durch Abwickeln der Rollobahnen 61 von der jeweiligen Wickelwelle 60 wird die Auflagefläche 21 in die durch den Pfeil dargestellte Richtung B bewegt und so der Stauraum des Staubehältnisses 204 vergrößert. Durch Aufwickeln der Rollobahnen 61 auf die Wickelwellen 60 wird die Auflagefläche 21 entgegen der Richtung B bewegt und das Staubehältnis 204 verkleinert.

Fig. 8 und 9 zeigen Varianten 204', 204" des in Fig. 7 dargestellten Staubehältnisses 204 ohne einen Rand der Auflagefläche 21.

Das in Fig. 8 dargestellte Staubehältnis 204' umfasst neben den sich gegenüberliegenden Rollos 6 eine weitere flexible Seitenwand 7, welche durch einen Nutzer über Haken 70 an dem Rahmen 20 zur Verbesserung der Stabilität befestigbar ist. Der Rahmen 20 ist in der Darstellung als gebogenes Rundmaterial ausgebildet, auf welchem beispielsweise die Wickelwellen 60 lagerbar sind. Das Rundmaterial ist durch eine entsprechende Verkleidung abdeckbar, so dass auch das Staubehältnis 204' in das in Fig. 3 dargestellte Modul einsetzbar ist.

Fig. 9 zeigt ein Staubehältnis 204", umfassend zwei Rollos sowie eine dritte Seitenwand, welche durch ein Verschwenken von Einlegeplatten 8 aufgebaut wird. An den Einlegeplatten 8 sind beispielsweise nicht dargestellte Clipse angeordnet, durch welche die Einlegeplatten 8 mit dem Rahmen 20 verbindbar sind. Die Einlegeplatten 8 können über den Rahmen 20 wie dargestellt hinausragen. Bevorzugt ragen sie jedoch über den Rahmen 20 nicht hinaus, so dass die Höhe des Staubehältnisses 204" unabhängig von dem Verschwenken der Einlegeplatten 8 ist und das Staubehältnis 204" in das Modul gemäß Fig. 3 einsetzbar ist.

In den Ausführungsformen gemäß den Fig. 8 und 9 sind die Rollobahnen 61 aus einer Materialbahn hergestellt und bilden so auch die Auflagefläche 21. Durch einen nicht dargestellten Einlegeboden, beispielsweise aus Holz oder Kunststoff, ist die Auflagefläche 21 verstärkbar.

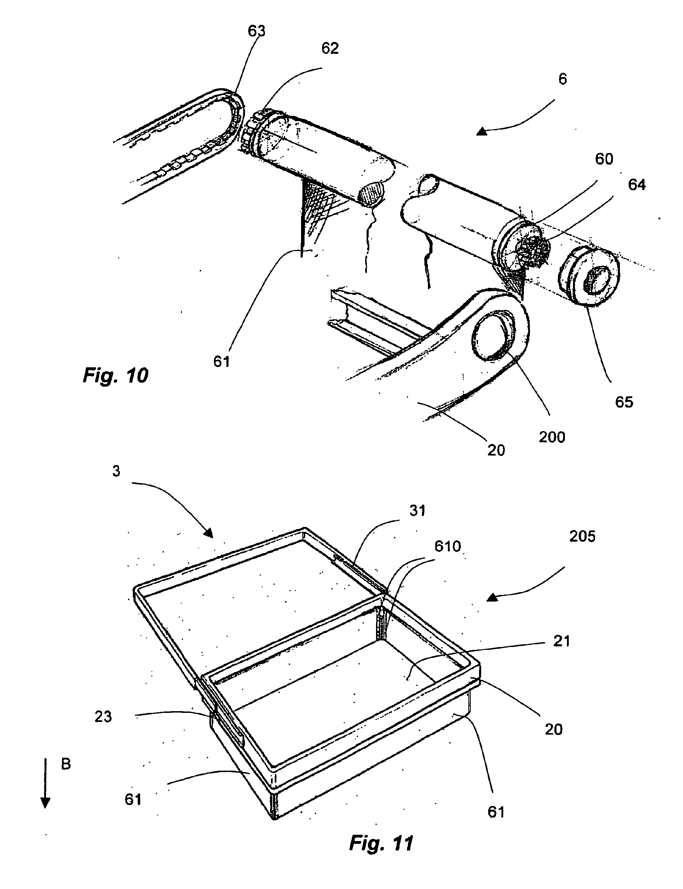

Fig. 10 zeigt schematisch eine Explosionsdarstellung eines Details des Staubehältnisses 204 gemäß Fig. 10, wobei nur eines der zwei Rollos 6 in Fig. 10 sichtbar ist. Die Wickelwellen 60 der Rollos 6 sind jeweils mit einem Ritzel 62 ausgebildet und werden über einen Riemen 63 synchronisiert. Durch eine parallele Anordnung der beiden Rollos 6 mit gleichem Drehsinn der Wickelwellen 60 ist eine einfache Synchronisation über einen Riemen 63 direkt möglich. Die Wickelwelle 60 ist weiter mit einem Verriegelungssegment 64 ausgebildet. Ein drehfest in einer Öffnung 200 des Rahmens 20 angeordneter Druckknopf 65 greift in das Verriegelungssegment 64 und verhindert so eine Drehung der Wickelwelle 60. Durch Betätigung des Druckknopfs 65 durch einen Nutzer wird die drehfeste Verbindung des Druckknopfs 65 mit dem Rahmen 20 gelöst. Dadurch ist die Wickelwelle 60 um ihre Achse drehbar. Durch eine nicht dargestellte Rückstellfeder, beispielsweise einen bekannten Wickelautomaten, wird die Rollobahn 61 nach Lösen der Verriegelung auf die Wickelwelle 60 aufgewickelt. Durch Einlegen eines Gegenstandes in das Staubehältnis 204, dessen Gewichtskraft größer ist als die Kraft der Rückstellfeder, wird die Rollobahn 61 von der Wickelwelle 60 abgewickelt. In einer bevorzugten Ausführungsform ist das Verriegelungssegment als Ratschentrieb ausgebildet, wobei ein Abwickeln der Rollobahn 61 aufgrund einer Gewichtskraft ohne eine Entriegelung über den Druckknopf 65 möglich ist, wohingegen ein Aufwickeln der Rollobahn 61 auf die Wickelwelle 60 nur durch eine Entriegelung möglich ist.

Fig. 11 zeigt eine weitere Ausführungsform eines Staubehältnisses 205, das auf dem Träger 3 verschiebbar gelagert ist. Bei dem Staubehältnis 205 sind die Auflagefläche 21 und der Rahmen 20 über vier Rollos 6, welche an den vier Seitenflächen des Staubehältnisses 205 angeordnet sind, miteinander verbunden. Die in Fig. 11 nicht sichtbaren Wickelwellen 60 der Rollos 6 sind dabei in dem Rahmen 20 angeordnet. Die Rollobahnen 61 sind an den aneinander angrenzenden Enden 610 über einen Reißverschluss miteinander verbindbar. Dadurch wird ein geschlossenes Staubehältnis bereitgestellt.

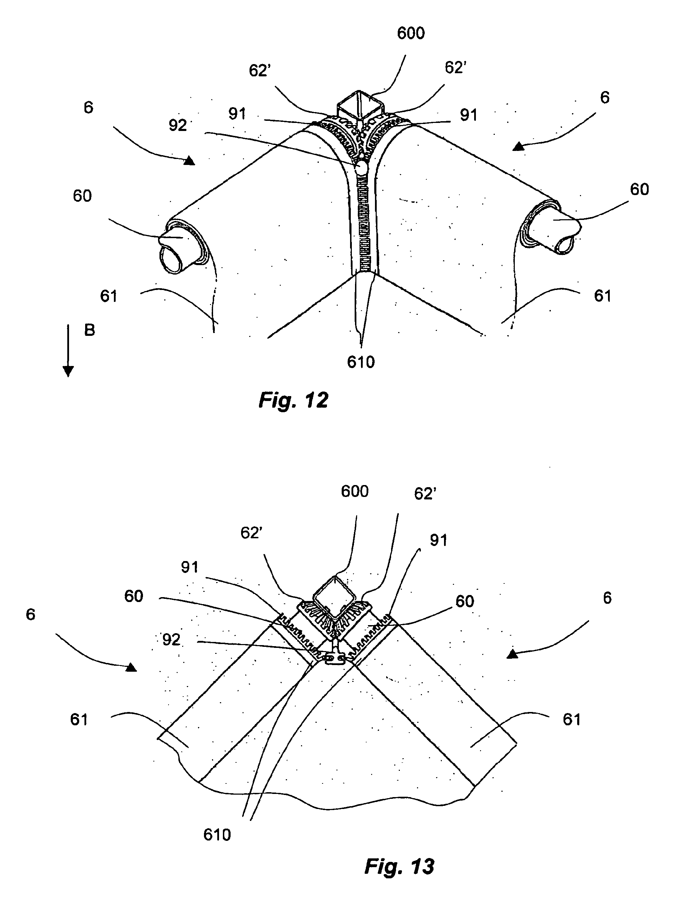

Fig. 12 und 13 zeigen teilweise freigeschnittene Detailansichten des Staubehältnisses 205 gemäß Fig. 11. Dabei zeigt Fig. 12 eine perspektivische Ansicht zweier angrenzender Rollos 6 und Fig. 13 eine Draufsicht auf die Detailansicht gemäß Fig. 12. Die aneinander angrenzenden Wickelwellen 60 der Rollos 6 sind über Kegelritzel 62' miteinander synchronisiert. Die Wickelwellen 60 sind an einem Halter 600 gelagert. An den Enden 610 der aneinander angrenzenden Rollobahnen 61 sind zueinander komplementäre Haken 91 eines Reißverschlusses angeordnet. Ein Reißverschlussschieber 92 ist ortsfest zu dem in Fig. 12 nicht dargestellten Rahmen 20 beispielsweise an dem Halter 600 gelagert.

Durch die ortsfeste Anordnung des Reißverschlussschiebers 92 werden die zueinander komplementären Haken 91 des Reißverschlusses an den Enden 610 der Rollobahn 61 bei einer Bewegung der Auflagefläche 21 entlang der durch einen Pfeil dargestellten Richtung B, d.h. bei einem Abwickeln der Rollobahn 61, miteinander verhakt. Bei einer Bewegung in die entgegengesetzte Richtung werden die Enden 610 der Rollobahn 61 voneinander gelöst und die Rollobahnen 61 sind so jeweils auf die zugehörige Wickelwelle 60 aufwickelbar.

Anstelle des dargestellten Reißverschlusses mit Haken 91 sind ebenso Reißverschlüsse mit ineinandergreifenden Nuten einsetzbar. Der Reißerschluss ist in einer Ausführungsform beschichtet, so dass das Staubehältnis durch den Reißverschluss wasserdicht verschließbar ist.

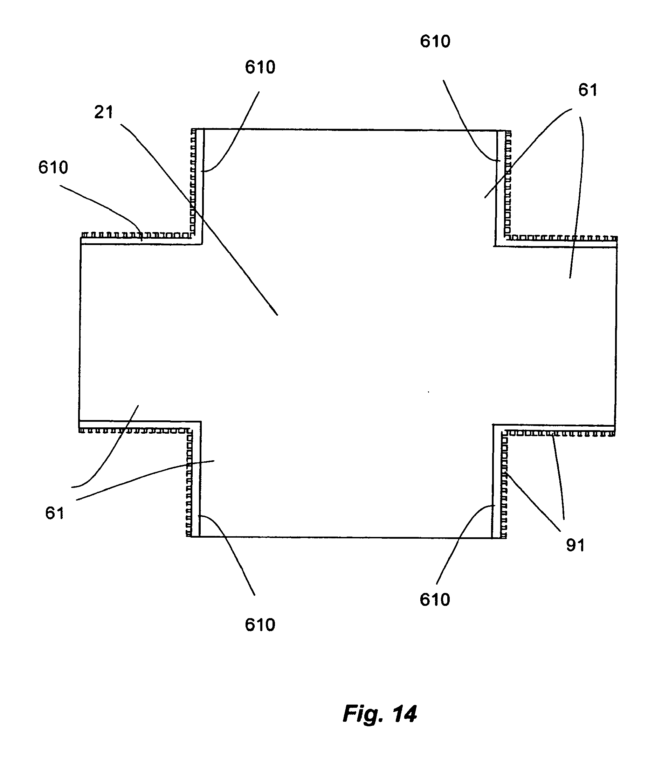

Die Rollobahn 61 und die Auflagefläche 21 sind vorzugsweise einstückig ausgebildet. Fig. 14 zeigt schematisch ein Schnittmuster für eine derartige Ausführungsform. Die Rollobahnen 61 grenzen dabei jeweils an einen Rand der Auflagefläche 21 an. Die freien Ränder 610 der Rollobahn 61 sind mit zueinander komplementären Haken 91 ausgebildet.

Die Auflagefläche 21 wird bei einer derartigen Ausführungsform des Staubehältnisses 205 gemäß den Fig. 11 bis 13 vorzugsweise durch einen Einlegeboden verstärkt.

In den dargestellten Ausführungsformen sind der Rahmen 20 und die Auflagefläche 21 jeweils rechteckig. Es sind jedoch auch andere Formen denkbar. Insbesondere bei Ausführungsformen, in welche das Staubehältnis nicht verschiebbar, sondern verschwenkbar gelagert ist können abweichende Formen vorteilhaft sein.

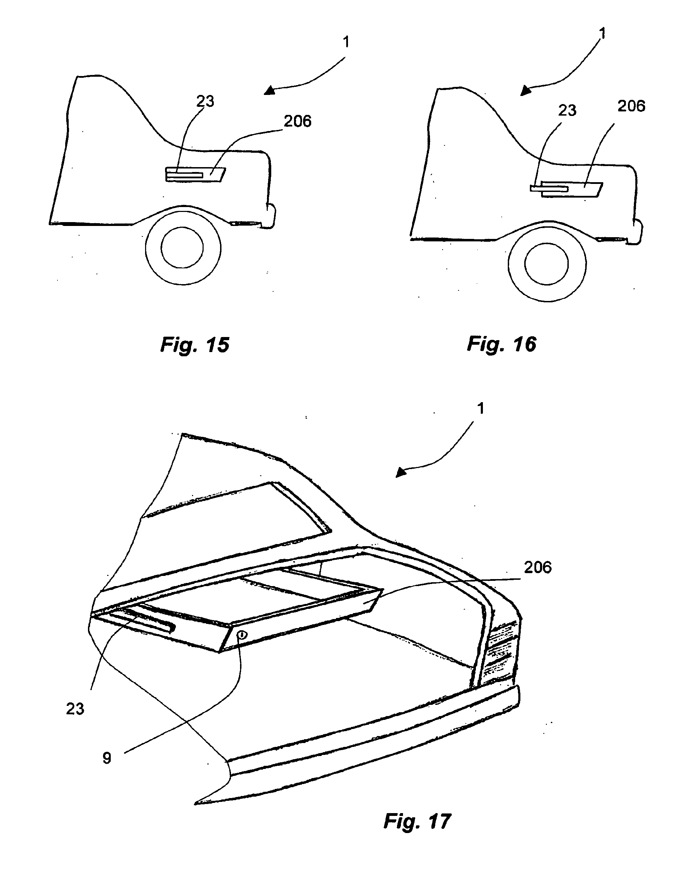

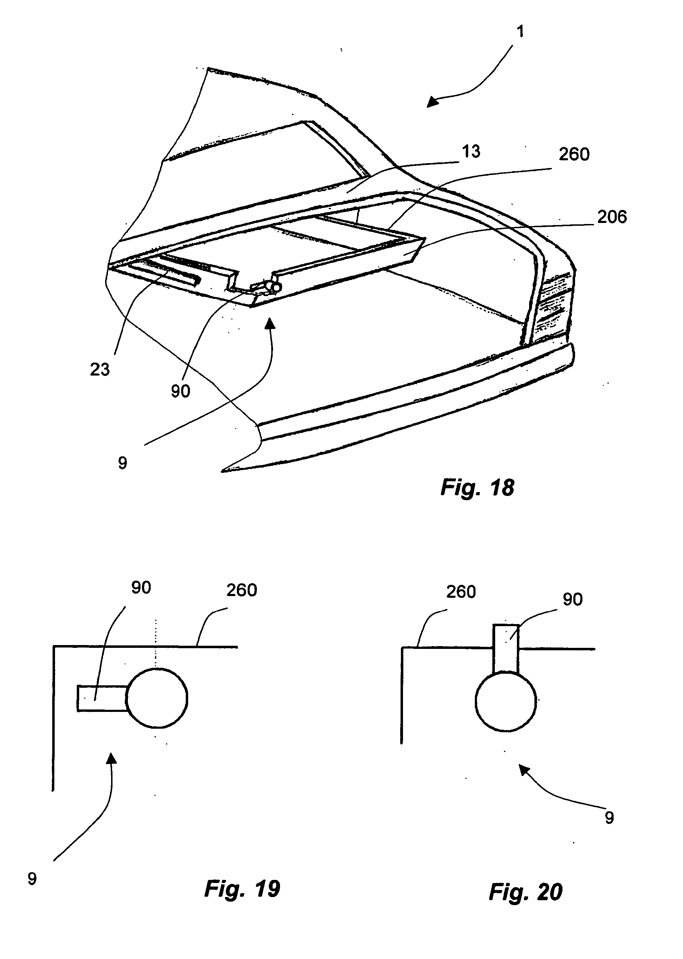

Fig. 15 bis 18 zeigen schematisch ein Heck eines Kraftfahrzeugs 1 mit einem Staubehältnis 206 gemäß einem weiteren Ausführungsbeispiel der Erfindung. Fig. 15 und 16 zeigen eine schematische Seitenansicht. Fig. 17 und 18 zeigen das Heck in einer perspektivischen Darstellung. Das Staubehältnis 206 ist über schematisch dargestellte Führungsschienen 23 verschieblich in dem Kraftfahrzeug 1 gelagert, wobei das Staubehältnis 206 zwischen einer in Fig. 15 dargestellten Verstauposition und der in Fig. 16, 17 und 18 schematisch dargestellten Be- und/oder Entladeposition verschiebbar ist. Bei dem Staubehältnis 206 sind Seitenwände und ein Rahmen einstückig miteinander ausgeformt, wobei eine Höhe des Staubehältnisses 206 beispielsweise durch eine teleskopierbare Gestaltung der Seitenwände gemäß Fig. 6 veränderbar ist. In anderen Ausgestaltungen ist die Seitenwand des Staubehältnisses 206 beispielsweise als faltbare Seitenwand gestaltet.

Fig. 17 zeigt schematisch das Heck des Kraftfahrzeugs 1 gemäß Fig. 16, wobei das Staubehältnis 206 sich wie in Fig. 16 dargestellt in der Be- und/oder Entladeposition befindet. Das Staubehältnis 206 weist einen Riegelmechanismus 9 auf, durch welchen das Staubehältnis in der in Fig. 15 dargestellten Verstauposition gegen ein Bewegen in die Be- und/oder Entladeposition gemäß Fig. 16 bis 18 verriegelbar ist.

Fig. 18 zeigt das Kraftfahrzeug 1 gemäß Fig. 17, wobei das Staubehältnis 206 teilweise freigeschnitten ist, so dass der Riegelmechanismus 9 besser erkennbar ist. Wie in Fig. 18 dargestellt, umfasst der gezeigte Riegelmechanismus 9 einen Hebel 90, welcher aus der in Fig. 18 dargestellten Entriegelposition, in welcher der Hebel 90 einen obere Rand 260 des Staubehältnisses 206 nicht überragt, durch Verschwenken in eine Verriegelposition bringbar ist, in welcher der Hebel den oberen Rand 260 überragt. Dabei kann der Hebel 90, wenn sich das Staubehältnis 206 in der Verstauposition gemäß Fig. 15 befindet, in seiner Verriegelposition hinter entsprechende Elemente einer Kraftfahrzeugkarosserie 13 greifen, so dass ein Verschieben des Staubehältnisses 206 aus der in Fig. 15 dargestellten Verstauposition in die in den Fig. 16 bis 18 dargestellte Be- und/oder Entladeposition gesperrt ist.

Die Fig. 19 und 20 zeigen schematisch den Riegelmechanismus 9, wobei sich der Hebel 90 in der Darstellung gemäß Fig. 19 in einer Entriegelposition und in der Darstellung gemäß Fig. 20 in einer zu der Entriegelposition gemäß Fig. 19 um 90° versetzten Verriegelposition befindet. In anderen Ausgestaltungen sind andere Schwenkwinkel denkbar, wobei der Hebel den obere Rand 260 des Staubehältnisses 206 in einer Entriegelposition nicht überragt und in einer Verriegelposition den oberen Rand 260 überragt, so dass er in entsprechende Gegenmittel greifen kann. Der Riegelmechanismus 9 kann ein Schloss umfassen, wobei eine Drehung eines in das Schloss eingeführten Schlüssels direkt in eine Drehung des Hebels 90 umgesetzt wird. In anderen Ausgestaltungen ist der Riegelmechanismus 9 derart gestaltet, dass ein Andrücken des Riegelmechanismus 9, insbesondere eines Betätigungsknopfes, eine Drehung des Hebels 90 bewirkt. Dabei kann ebenfalls ein Schloss vorgesehen sein, welches eine Betätigung des Riegelmechanismus elektronisch und/oder mechanisch verhindert.

## Patentansprüche

1. Staubehältnis für den Einsatz in einem Laderaum (10) eines Kraftfahrzeugs (1), das auf der Unterseite einer Hutablage (12) befestigbar und zum Beladen in mindestens eine Be- und/oder Entladeposition bewegbar ist,
wobei
das Staubehältnis (2, 204-206) einen Rahmen (20), eine Auflagefläche (21) und mindestens eine, die Auflagefläche (21) mit dem Rahmen (20) verbindende, im Wesentlichen unelastische Seitenwand (22, 24, 25, 26, 61) umfasst, wobei
die Seitenwand (22, 24, 25, 26, 61) verformbar ist, so dass die Höhe des Staubehältnisses (2, 204-206) variabel ist, und wobei die Auflagefläche (21) und/oder der Rahmen (20) im Wesentlichen rechteckig und über mindestens zwei, einander gegenüberliegende Seitenwände (22, 24, 25, 26, 61) verbunden sind, **dadurch gekennzeichnet, dass** jede Seitenwand durch jeweils ein Rollo (6) mit mindestens einer Wickelwelle (60) und einer um die Wickelwelle (60) auf- und abwickelbaren Rollobahn (61) gebildet ist.

2. Staubehältnis nach Anspruch 1, **dadurch gekennzeichnet, dass** die Auflagefläche (21) im Wesentlichen rechteckig ist und das Staubehältnis (204, 204', 204", 205) mindestens zwei, einander gegenüberliegende, synchronisierte Rollos (6) umfasst.

3. Staubehältnis nach Anspruch 2, **dadurch gekennzeichnet, dass** zwei aneinander angrenzende Rollos (6) über Kegelritzel (62') synchronisiert sind.

4. Staubehältnis nach einem der Ansprüche 1 bis 3, umfassend mindestens zwei aneinander angrenzende Rollos (6), deren Rollobahnen (61) an angrenzenden Enden (610) komplementäre Verbindungsmittel, insbesondere komplementäre Seiten eines Reißverschlusses, aufweisen.

5. Staubehältnis nach Anspruch 4, **dadurch gekennzeichnet, dass** die Auflagefläche (21) zwischen einer ersten Nichtbenutzungsstellung und einer zweiten Benutzungsstellung bewegbar ist, und die Rollobahnen (61) durch ein feststehendes Verknüpfungsmittel (92) bei einer Bewegung in die Benutzungsstellung miteinander verknüpfbar und bei einer Bewegung in die Nichtbenutzungsstellung voneinander lösbar sind.

6. Staubehältnis nach einem der Ansprüche 1 bis 5, **dadurch gekennzeichnet, dass** die Rollobahn (61) in mindestens einer Wickelposition verriegelbar ist.

7. Staubehältnis nach einem der genannten Ansprüche **dadurch gekennzeichnet, dass** die Seitenwand und die Auflagefläche (21) einstückig ausgeformt sind.

8. Staubehältnis nach einem der genannten Ansprüche, **dadurch gekennzeichnet, dass** mindestens eine Einlegeplatte (8) zur Verstärkung von mindestens einer Seitenwand und/oder der Auflagefläche (21) vorgesehen ist.

9. Staubehältnis nach Anspruch 8, **dadurch gekennzeichnet, dass** die Einlegeplatte faltbar ist.

10. Staubehältnis nach Anspruch 8 oder 9, **dadurch gekennzeichnet, dass** die Einlegeplatte (8) schwenkbar an der Auflagefläche (21) angeordnet ist.

11. Staubehältnis nach Anspruch 1, **dadurch gekennzeichnet, dass** der Rahmen (20) verschiebbar an der Hutablage des Kraftfahrzeugs (1) lagerbar ist.

12. Staubehältnis nach Anspruch 1, **dadurch gekennzeichnet, dass** das Staubehältnis (2, 204-206) über ein Rückstellmittel, insbesondere eine Feder, belastet ist, welche die Auflagefläche (21) in Richtung des Rahmens (20) zwingt.

13. Staubehältnis nach einem der genannten Ansprüche, **dadurch gekennzeichnet, dass** das Staubehältnis (2, 204-206) mindestens einen Riegelmechanismus (9) aufweist, durch welchen es in der Verstauposition gegen ein Bewegen in die Be- und/oder Entladeposition verriegelbar ist.

## Claims

1. Storage container for use in a boot (10) of a motor vehicle (1), which container is fastenable on the lower side of a rear parcel shelf (12) and for loading is movable into at least one loading and/or unloading position, where
the storage container (2, 204-206) comprises a frame (20), a supporting surface (21) and at least one substantially inelastic side wall (22, 24, 25, 26, 61) connecting the supporting surface (21) to the frame (20), where
the side wall (22, 24, 25, 26, 61) can be formed such that the height of the storage container (2, 204-206) is variable, and where the supporting surface (21) and/or the frame (20) are substantially rectangular and connected by at least two opposite side walls (22, 24, 25, 26, 61), **characterized in that** each side wall is formed by a roller blind (6) with at least one winding shaft (60) and a roller blind web (61) which can be wound and unwound about the winding shaft (60).

2. Storage container according to Claim 1, **characterized in that** the supporting surface (21) is substantially rectangular and the storage container (204, 204', 204", 205) comprises at least two opposite and synchronized roller blinds (6).

3. Storage container according to Claim 2, **characterized in that** two adjacent roller blinds (6) are synchronized by bevel gear pinions (62').

4. Storage container according to one of Claims 1 to 3, comprising at least two adjacent roller blinds (6) whose roller blind webs (61) have at adjacent ends (610) complementary connecting means, in particular complementary sides of a zip fastener.

5. Storage container according to Claim 4, **characterized in that** the supporting surface (21) is movable between a first not-in-use position and a second in-use position, and the roller blind webs (61) can be linked to one another by a fixed linking means (92) during a movement to the in-use position and can be released from one another during a movement to the not-in-use position.

6. Storage container according to one of Claims 1 to 5, **characterized in that** the roller blind web (61) can be locked in at least one winding position.

7. Storage container according to one of the above claims, **characterized in that** the side wall and the supporting surface (21) are molded in one piece.

8. Storage container according to one of the above claims, **characterized in that** at least one insert panel (8) is provided for reinforcement of at least one side wall and/or of the supporting surface (21).

9. Storage container according to Claim 8, **characterized in that** the insert panel is foldable.

10. Storage container according to Claim 8 or Claim 9, **characterized in that** the insert panel (8) is pivotably arranged on the supporting surface (21).

11. Storage container according to Claim 1, **characterized in that** the frame (20) can be movably mounted on the rear parcel shelf of the motor vehicle (1).

12. Storage container according to Claim 1, **characterized in that** the storage container (2, 204-206) is loaded by a resetting means, in particular a spring, which forces the supporting surface (21) in the direction of the frame (20).

13. Storage container according to one of the above claims, **characterized in that** the storage container (2, 204-206) has at least one latch mechanism (9) by which it can be locked in the storage position against a movement into the loading and/or unloading position.

## Revendications

1. Récipient de rangement pour utilisation dans un coffre à bagages (10) d'un véhicule automobile (1), qui peut être fixé à la face inférieure d'une plage arrière (12) et déplacé dans au moins une position de chargement et/ou de déchargement,
sachant que
le récipient de rangement (2, 204-206) comprend un cadre (20), une surface portante (21) et au moins une paroi latérale (22, 24, 25, 26, 61) pour l'essentiel non élastique reliant la surface portante (21) au cadre (20),
sachant que
la paroi latérale (22, 24, 25, 26, 61) est déformable, si bien que la hauteur du récipient de rangement (2, 204-206) est variable, et que la surface portante (21) et/ou le cadre (20) sont pour l'essentiel rectangulaires et reliés par au moins deux parois latérales (22, 24, 25, 26, 61) opposées, **caractérisé en ce que** chaque paroi latérale est formée par un store (6) avec au moins un arbre d'enroulement (60) et une bande de store (61) déroulable et enroulable autour de l'arbre d'enroulement (60).

2. Récipient de rangement selon la revendication 1, **caractérisé en ce que** la surface portante (21) est pour l'essentiel rectangulaire et que le récipient de rangement (204, 204', 204", 205) comprend au moins deux stores (6) opposés et synchronisés.

3. Récipient de rangement selon la revendication 2, **caractérisé en ce que** deux stores (6) adjacents sont synchronisés au moyen de pignons coniques (62').

4. Récipient de rangement selon l'une des revendications 1 à 3, comprenant au moins deux stores (6) adjacents, dont les bandes de store (61) présentent sur leurs extrémités adjacentes (610) des moyens de liaison complémentaires, en particulier les côtés complémentaires d'une fermeture à glissière.

5. Récipient de rangement selon la revendication 4, **caractérisé en ce que** la surface portante (21) peut être déplacée entre une première position de non-utilisation et une seconde position d'utilisation, et que les bandes de store (61) peuvent être reliées entre elles par un moyen de liaison fixe (92) lors d'un mouvement dans la position d'utilisation et peuvent être détachées l'une de l'autre lors d'un mouvement dans la position de non-utilisation.

6. Récipient de rangement selon l'une des revendications 1 à 5, **caractérisé en ce que** la bande de store (61) peut être verrouillée dans au moins une position d'enroulement.

7. Récipient de rangement selon l'une des revendications mentionnées, **caractérisé en ce que** la paroi latérale et la surface portante (21) sont formées en une seule pièce.

8. Récipient de rangement selon l'une des revendications mentionnées, **caractérisé en ce qu'**est prévue au moins une plaque d'insertion (8) pour renforcer au moins une paroi latérale et/ou la surface portante (21).

9. Récipient de rangement selon la revendication 8, **caractérisé en ce que** la plaque d'insertion est pliable.

10. Récipient de rangement selon la revendication 8 ou 9, **caractérisé en ce que** la plaque d'insertion (8) est fixée de manière pivotante sur la surface portante (21).

11. Récipient de rangement selon la revendication 1, **caractérisé en ce que** le cadre (20) peut être fixé de manière mobile à la plage arrière du véhicule automobile (1).

12. Récipient de rangement selon la revendication 1, **caractérisé en ce que** le récipient de rangement (2, 204-206) est sollicité par un moyen de rappel, en particulier un ressort, qui pousse la surface portante (21) en direction du cadre (20).

13. Récipient de rangement selon l'une des revendications mentionnées, **caractérisé en ce que** le récipient de rangement (2, 204-206) présente au moins un mécanisme de verrouillage (9) au moyen duquel il peut être verrouillé en position rangée contre un mouvement dans la position de chargement et/ou de déchargement.
